# EUROPEAN PATENT SPECIFICATION

(11) **EP 3 892 900 B1**
(45) Date of publication and mention of the grant of the patent: **29.05.2024**
(21) Application number: 19893981.1
(22) Date of filing: 05.11.2019
(51) Int. Cl.: F16K 37/00, F16K 27/00, F16K 27/06

(54) **FLOW PASSAGE SWITCHING VALVE AND METHOD FOR ASSEMBLING SAME**
DURCHFLUSSUMSCHALTVENTIL UND VERFAHREN ZU DESSEN ZUSAMMENBAU
SOUPAPE DE COMMUTATION DE PASSAGE D'ÉCOULEMENT ET SON PROCÉDÉ D'ASSEMBLAGE

(30) Priority: 06.12.2018 JP 2018229056
(43) Date of publication of application: 13.10.2021
(73) Proprietor: Fujikoki Corporation, Tokyo 158-0082 (JP)
(72) Inventor: KONDO Daisuke, Tokyo 158-0082 (JP); MOCHIZUKI Kenichi, Tokyo 158-0082 (JP); YAMASHITA Masashi, Tokyo 158-0082 (JP); HARA Seiichi, Tokyo 158-0082 (JP)
(74) Representative: Ter Meer Steinmeister & Partner
(86) International application number: PCT/JP2019/043320
(87) International publication number: WO 2020/116072

(56) References cited:
- JP-A- 2003 314 725
- JP-A- 2003 314 725
- JP-A- 2013 057 394
- JP-A- 2015 125 038
- JP-A- 2017 067 110
- JP-A- 2017 067 110
- JP-A- 2017 198 591
- JP-A- 2017 198 591
- JP-A- 2018 044 768

## Description

### Technical Field

The present invention relates to a flow channel switching valve and a method for assembling the flow channel switching valve.

### Background Art

An example of an existing flow channel switching valve is disclosed in Patent Literature 1. The flow channel switching valve includes a valve case, a geared motor that is disposed on an upper portion of the valve case, and a ball valve member that is disposed in a valve chamber of the valve case. The geared motor rotationally drives the ball valve member via a valve shaft.

### Citation List

### Patent Literature

JP 2017 067110 A discloses a flow control valve, configured to control a flow rate of a fluid with a driving motor driving a valve body, including a rotational shaft rotating integrally with the valve body, and an angular sensor configured to detect a rotation angle of the rotation shaft, wherein a fitting substrate is arranged in parallel through at least a pair of support members on a reference surface arranged so as to be orthogonal to the rotational shaft. The angular sensor is attached to the fitting substrate, and the rotational shaft is directly connected to the angular sensor.

JP 2010-223418 A discloses a flow channel switching valve including a potentiometer that is a rotational angle sensor that detects the rotational angle of the valve shaft. The potentiometer is supported by a potentiometer base (a base body) inside a geared motor case and is disposed above the valve shaft. However, it is necessary for the potentiometer base to be disposed with precision with respect to the valve shaft in order to inhibit the potentiometer and the valve shaft from being misaligned because after the potentiometer base is mounted on the case, the potentiometer is mounted on the potentiometer base.

In view of this, it is an object of the present invention to provide a flow channel switching valve that enables a base body that supports a rotational angle sensor to be disposed with precision with respect to a valve shaft, and a method for assembling the flow channel switching valve.

### Solution to Problem

To achieve the object described above, a flow channel switching valve according to claim 1 of the present invention includes a valve body, a valve member that is rotatably installed in the valve body, a valve shaft that is mounted on the valve member, a driving section that rotationally drives the valve member via the valve shaft, a rotational position detection portion that detects a rotational position of the valve member, and a case that is mounted on the valve body and that contains the driving section and the rotational position detection portion. The valve shaft is rotatably supported by a bearing portion that is included in the case, and the valve shaft has an end portion on which the valve member is mounted. The rotational position detection portion includes a rotational angle sensor that detects a rotational angle of the valve shaft and a base body that supports the rotational angle sensor. The base body includes a base main body portion that is mounted on the case and a sensor support portion that is disposed facing the other end portion of the valve shaft and having the rotational angle sensor mounted thereon. The sensor support portion has a through-hole that has an arc shape along an outer circumferential surface of the valve shaft and that is formed such that the valve shaft is visible when viewed in the direction of the axis of the valve shaft, or through-holes that are arranged in an interval along the outer circumferential surface of the valve shaft and that are formed such that the valve shaft is visible when viewed in the direction of the axis of the valve shaft.

In the present invention, the sensor support portion preferably includes a side wall portion that surrounds the through-hole or the through-holes.

In the present invention, the flow channel switching valve preferably further includes a rotational angle output shaft that is press-fitted in a mounting hole that is formed in an end surface of the other end portion of the valve shaft, and the sensor support portion preferably has an output shaft through-hole through which the rotational angle output shaft extends.

To achieve the object described above, a method for assembling a flow channel switching valve according to claim 4 of the present invention is a method for assembling the flow channel switching valve as above, the method including: adjusting a position of the base body such that a round columnar portion of the valve shaft is visible without deviation through the through-hole or the through-holes; subsequently, inserting a part of a jig into the through-hole or the through-holes to bring the part into contact with the outer circumferential surface of the valve shaft and to bring the other part of the jig into contact with the sensor support portion, adjusting positions of the valve shaft and the sensor support portion; subsequently, mounting the base main body portion on the case; and subsequently, removing the jig.

In the present invention, the sensor support portion includes a side wall portion that surrounds the through-hole or the through-holes, the other end portion of the valve shaft includes a round columnar portion, the jig includes a jig body that has a round columnar shape and a position adjustment portion that has an arc wall shape that extends downward from the lower surface of the jig body, the jig body and the position adjustment portion being coaxially disposed, wherein the outer diameter of the jig body is equal to the inner diameter of the side wall portion of the sensor support portion and the inner diameter of the position adjustment portion is equal to the outer diameter of the round columnar portion of the valve shaft. The method further comprises: inserting the position adjustment portion of the position adjustment jig into the position adjustment through-hole or the through-holes of the sensor support portion such that an inner surface of the position adjustment portion comes into contact with the outer circumferential surface of the round columnar portion of the valve shaft, and an outer circumferential surface of the jig body comes into contact with an inner surface of the side wall portion of the sensor support portion.

### Advantageous Effects of Invention

According to the present invention, the rotational position detection portion that detects the rotational position of the valve member includes the rotational angle sensor that detects the rotational angle of the valve shaft and the base body that supports the rotational angle sensor. The base body includes the base main body portion that is mounted on the case and the sensor support portion that is disposed facing the other end portion of the valve shaft and having the rotational angle sensor mounted thereon. The sensor support portion has the through-hole that has an arc shape along the outer circumferential surface of the valve shaft or the through-holes that are arranged in an interval along the outer circumferential surface of the valve shaft. In this way, for example, the positions of the valve shaft and the sensor support portion can be adjusted while the valve shaft is viewed through the through-hole or the through-holes. Otherwise, when the jig is used, a part of the jig is inserted into the through-hole or the through-holes, the part is brought into contact with the outer circumferential surface of the valve shaft, the other part of the jig is brought into contact with the sensor support portion, and the positions of the valve shaft and the sensor support portion can be adjusted. For this reason, the base body that supports the rotational angle sensor can be disposed with precision with respect to the valve shaft, and the valve shaft and the rotational angle sensor can be effectively inhibited from being misaligned.

### Brief Description of Drawings

[Fig. 1] Fig. 1 is a perspective view of a flow channel switching valve according to an embodiment of the present invention.
[Fig. 2] Fig. 2 is a vertical cross-sectional view of the flow channel switching valve in Fig. 1.
[Fig. 3] Fig. 3 is a cross-sectional view taken along line A-A in Fig. 2.
[Fig. 4] Fig. 4 is a plan view of the flow channel switching valve in Fig. 1 with an upper wall portion of a gear case portion removed.
[Fig. 5] Fig. 5 is a plan view for describing a method for assembling the flow channel switching valve in Fig. 1 (with a driving section assembled).
[Fig. 6] Fig. 6 is a plan view for describing the method for assembling the flow channel switching valve in Fig. 1 (with the position of a potentiometer base adjusted).
[Fig. 7] Fig. 7 is a vertical cross-sectional view for describing the method for assembling the flow channel switching valve in Fig. 1 (with the position of the potentiometer base adjusted by using a jig).
[Fig. 8] Figs. 8 illustrate an example of the jig that is used for assembling the flow channel switching valve in Fig. 1.
[Fig. 9] Fig. 9 is a plan view of the structure of a modification of the flow channel switching valve in Fig. 1. Description of Embodiments

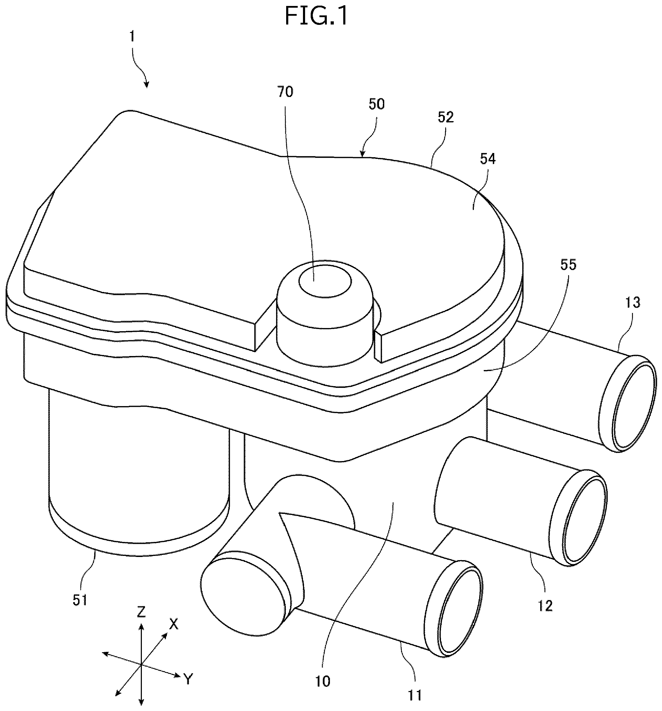

A flow channel switching valve according to an embodiment of the present invention will now be described with reference to Fig. 1 to Figs. 8.

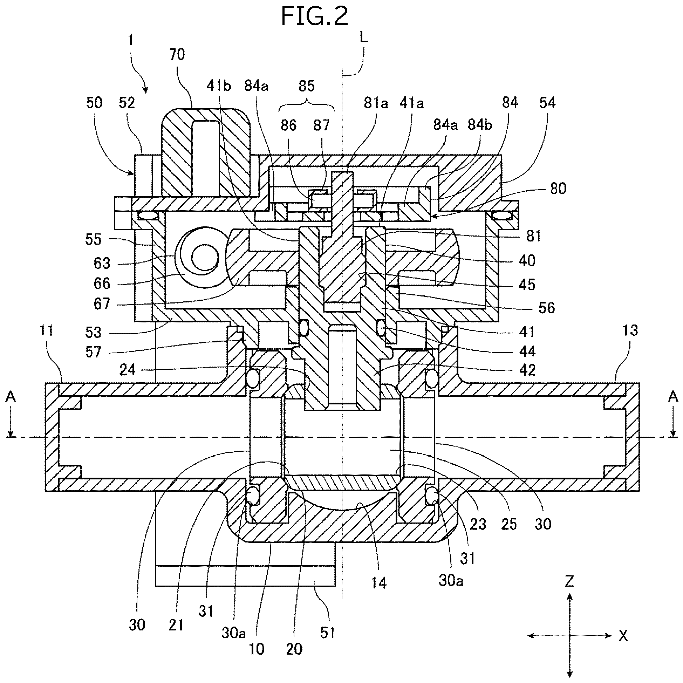

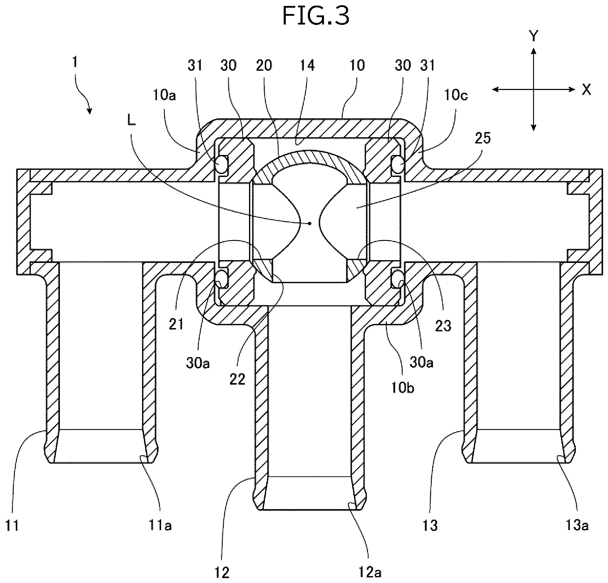

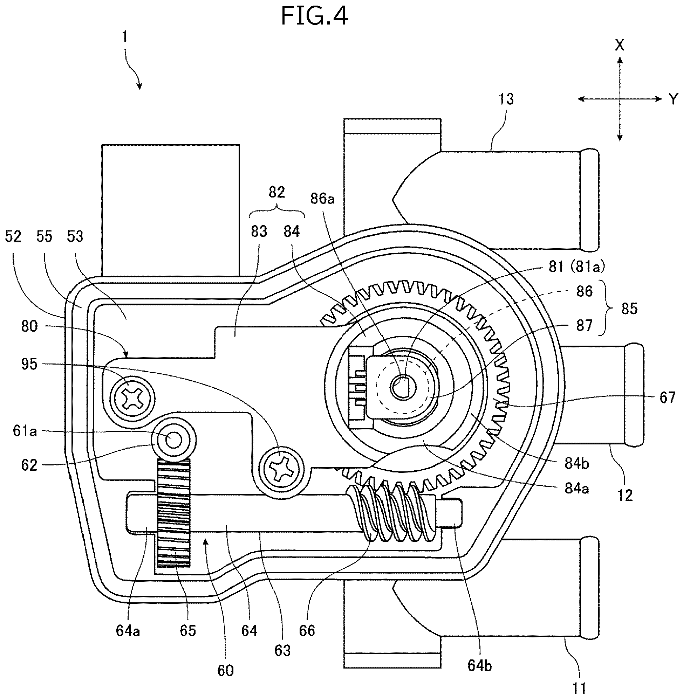

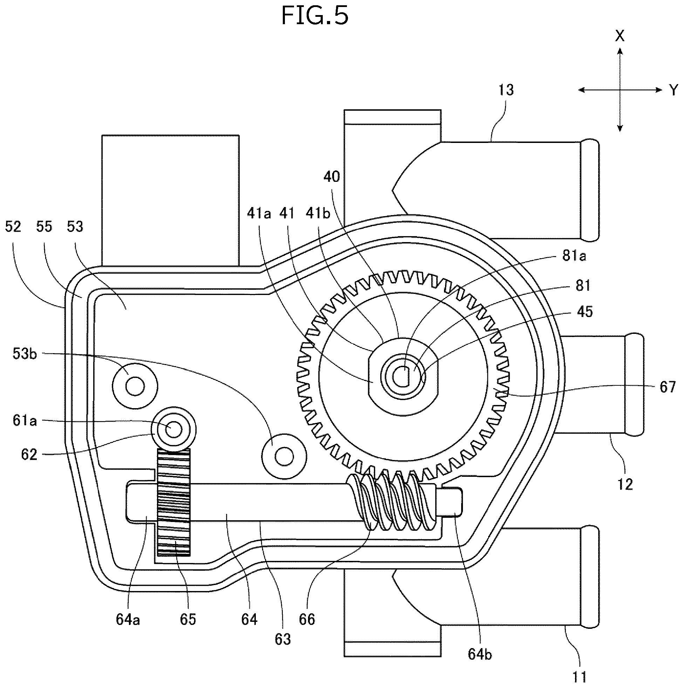

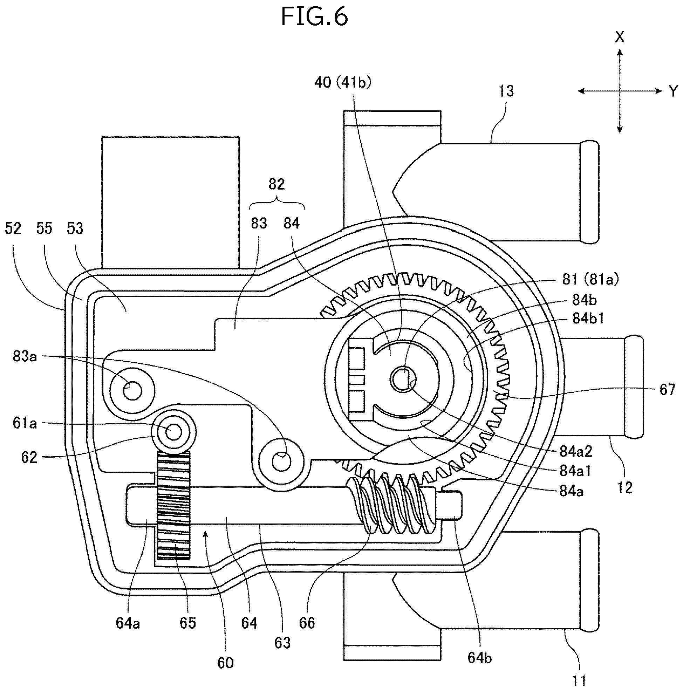

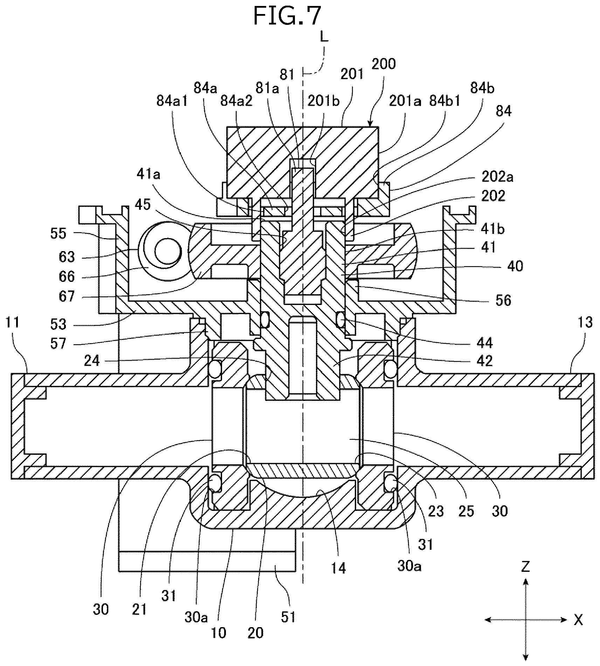

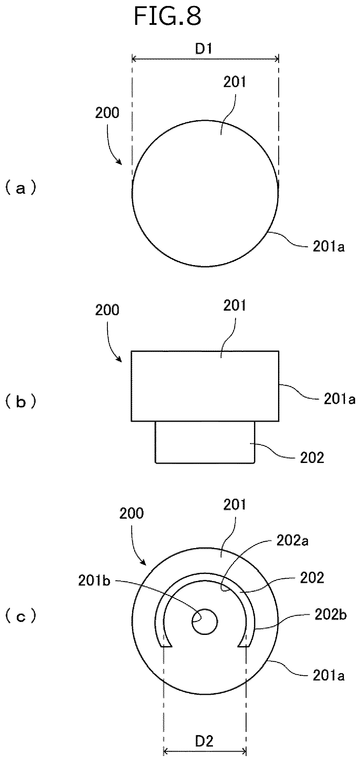

Fig. 1 is a perspective view of the flow channel switching valve according to the embodiment of the present invention. Fig. 2 is a vertical cross-sectional view of the flow channel switching valve in Fig. 1. Fig. 3 is a cross-sectional view taken along line A-A in Fig. 2. Fig. 4 is a plan view of the flow channel switching valve in Fig. 1 with an upper wall portion of a gear case removed. Fig. 5 and Fig. 6 are plan views for describing a method for assembling the flow channel switching valve in Fig. 1. Fig. 5 and Fig. 6 show a state in which a driving section assembled and show a state in which the position of a potentiometer base adjusted. Fig. 7 is a vertical cross-sectional view for describing the method for assembling the flow channel switching valve in Fig. 1 with the position of the potentiometer base adjusted by using a jig. Figs. 8 illustrate an example of the jig that is used for assembling the flow channel switching valve in Fig. 1, in which (a) is a plan view, (b) is a front view, and (c) is a bottom view. In the following description, the terms "upper, lower, left, and right" are used to represent relative positional relationships of components in the figures and do not represent absolute positional relationships. In the figures, an X-axis direction represents a left-and-right direction, a Y-axis direction represents a front-and-rear direction (a front-back direction), and a Z-axis direction represents an up-and-down direction. An X-axis, a Y-axis, a Z-axis are perpendicular to each other.

As illustrated in the figures, a flow channel switching valve 1 according to the present embodiment includes a valve body 10, a ball valve member 20 that serves as a valve member, seat members 30, sealing members 31, and a valve shaft 40. The flow channel switching valve 1 also includes a case 50, a driving section 60, a ventilation portion 70, and a rotational position detection portion 80.

The valve body 10 is composed of, for example, synthetic resin such as polyphenylene sulfide (PPS) and has a substantially cubic box shape an upper end of which has an opening.

A first flow channel 11 that has a substantially L-shape is formed on a left side wall portion 10a of the valve body 10. A second flow channel 12 that has a straight-line shape is formed on a front wall portion 10b of the valve body 10. A third flow channel 13 that has a substantially L-shape that is plane-symmetrical with the first flow channel 11 is formed on a right side wall portion 10c of the valve body 10. An opening 11a of the first flow channel 11, an opening 12a of the second flow channel 12, and an opening 13a of the third flow channel 13 are directed in the same direction (the front direction). The first flow channel 11, the second flow channel 12, and the third flow channel 13 are in communication with a valve chamber 14 that is formed in the valve body 10. Two flow channels or four or more flow channels in communication with the valve chamber 14 may be formed.

The ball valve member 20 is composed of, for example, a material such as metal or synthetic resin and has a hollow ball-like shape (a spherical shape). The ball valve member 20 is rotatably supported by the seat members 30 and is installed in the valve chamber 14. The ball valve member 20 has a first opening 21 that opens in the left-hand direction, a second opening 22 that opens in the front direction, and a third opening 23 that opens in the righthand direction when being located at a rotational position illustrated in Fig. 3. A switching flow channel 25 is formed in the ball valve member 20. The switching flow channel 25 has a substantially T-shape in a plan view and that connects the first opening 21, the second opening 22, and the third opening 23 to each other. For example, the ball valve member 20 may have only the first opening 21 and the second opening 22. The ball valve member 20 may have the switching flow channel 25 that has a substantially L-shape in a plan view and that connects the first opening 21 and the second opening 22 to each other when the ball valve member 20 is located at the rotational position illustrated in Fig. 3. In the present embodiment, the ball valve member 20 is used as the valve member, but a columnar valve member may be used.

The switching flow channel 25 is formed such that connections among the first flow channel 11, the second flow channel 12, and the third flow channel 13 are switched depending on the rotational position of the ball valve member 20. Specifically, the switching flow channel 25 connects the first flow channel 11, the second flow channel 12, and the third flow channel 13 to each other when the ball valve member 20 is located at the rotational position illustrated in Fig. 3. The switching flow channel 25 connects the first flow channel 11 and the second flow channel 12 to each other when the ball valve member 20 is located at the rotational position at which the ball valve member 20 is rotated 90 degrees clockwise in a plan view from the rotational position illustrated in Fig. 3. The switching flow channel 25 connects the second flow channel 12 and the third flow channel 13 to each other when the ball valve member 20 is located at the rotational position at which the ball valve member 20 is rotated 90 degrees counterclockwise in a plan view from the rotational position illustrated in Fig. 3.

A valve shaft insertion hole 24 in which the valve shaft 40 is inserted is formed in an upper portion of the ball valve member 20. The valve shaft insertion hole 24 is formed such that the ball valve member 20 is rotated about an axis L corresponding to a rotational axis together with rotation of the valve shaft 40 with the valve shaft 40 inserted therein. In the present embodiment, the valve shaft insertion hole 24 has a regular hexagonal shape.

The seat members 30 are composed of, for example, synthetic resin such as polytetrafluoroethylene (PTFE) and have an annular shape. The seat members 30 are paired with each other and are installed in the valve chamber 14 so as to face each other in an interval in the left-and-right direction. The seat members 30 that the ball valve member 20 is disposed therebetween rotatably support the ball valve member 20 in the valve chamber 14.

The sealing members 31 are, for example, O-rings composed of an elastic material such as a rubber material, one of which is disposed between one of the seat members 30 and the left side wall portion 10a of the valve body 10 so as to be in a compressed state, and the other of which is disposed between the other seat member 30 and the right side wall portion 10c of the valve body 10 so as to be in the compressed state. In the present embodiment, the sealing members 31 are fitted in annular grooves 30a that the seat members 30 have and partly project from the annular grooves 30a. The sealing members 31 seal a space between the valve body 10 and the ball valve member 20 together with the seat members 30. The flow channel switching valve may have a structure omitting the sealing members 31 and employing seat members 30 that are composed of an elastic material such as a rubber material and that have the function of the sealing members instead.

The valve shaft 40 is composed of synthetic resin, has a columnar shape that linearly extends overall, and includes a round columnar portion 41 and a prism portion 42 that is coaxially connected to the lower end of the round columnar portion 41. The valve shaft 40 extends along the axis L.

A groove is formed on a lower end portion of the round columnar portion 41 over the entire circumference, and an O-ring 44 that is composed of, for example, a rubber material and that has an annular shape is fitted in the groove. A large-diameter gear 67 of the driving section 60 is coaxially mounted on an upper end portion of the round columnar portion 41. A mounting hole 45 that has a substantially round columnar shape along the axis L is formed at the center of an end surface 41a of the round columnar portion 41 that faces upward. A potentiometer shaft 81 of the rotational position detection portion 80 is mounted in the mounting hole 45 by press-fitting.

The prism portion 42 has a columnar shape of which a cross-sectional shape (a transverse cross-sectional shape) perpendicular to the axis L is the same regular hexagonal shape as the valve shaft insertion hole 24. The prism portion 42 is inserted in the valve shaft insertion hole 24 of the ball valve member 20 and is consequently mounted on the ball valve member 20 along the axis L. The prism portion 42 corresponds to an end portion of the valve shaft 40. The transverse cross-sectional shape of the prism portion 42 is formed in the same regular hexagonal shape as the valve shaft insertion hole 24. For this reason, the valve shaft insertion hole 24 and the prism portion 42 fit together, and the ball valve member 20 is rotated about the axis L together with rotation of the valve shaft 40. The prism portion 42 may have a polygonal columnar shape such as a triangular prism shape or a quadrangular prism shape in addition to a regular hexagonal prism shape. Instead of the prism portion 42, a columnar having a plane on a part of the circumferential surface and having a D-shaped cross-section may be used. In this case, the valve shaft insertion hole 24 has the same shape as the transverse cross-sectional shape of the prism portion 42.

The case 50 is composed of, for example, synthetic resin such as polyphenylene sulfide (PPS), is mounted on the valve body 10, and contains the driving section 60. The case 50 includes a motor case 51 and a gear case 52.

The motor case 51 has a bottomed cylindrical shape, and a motor of the driving section 60, not illustrated, is installed therein.

The gear case 52 includes a bottom wall portion 53 that is integrally formed with the motor case 51 and that has a flat plate shape, an upper wall portion 54 in which the ventilation portion 70 through which air flows into and from the gear case 52 is disposed, and a peripheral wall portion 55 that couples the bottom wall portion 53 and the upper wall portion 54 with each other. In the present embodiment, the bottom wall portion 53 and the peripheral wall portion 55 are integrally formed with each other, and the upper wall portion 54 is mounted on the upper end of the peripheral wall portion 55 by using, for example, a screw structure or a snap-fit structure not illustrated. A first worm 62, an intermediate gear body 63, and the large-diameter gear 67 of the driving section 60 and the rotational position detection portion 80 are installed in the gear case 52.

The gear case 52 includes a cylindrical bearing portion 56 that is integrated with the bottom wall portion 53. The round columnar portion 41 of the valve shaft 40 is disposed in the bearing portion 56, and the bearing portion 56 rotatably supports the round columnar portion 41. The gear case 52 includes an inner peripheral wall portion 57 that protrudes downward from the bottom wall portion 53 and that has a substantially square tube shape. The inner peripheral wall portion 57 is disposed in the valve body 10 and is joined to the valve body 10 by, for example, ultrasonic welding. The gear case 52 may be mounted on the valve body 10 by using, for example, a screw structure.

The driving section 60 rotationally drives the ball valve member 20 via the valve shaft 40. The driving section 60 includes the motor not illustrated, the first worm 62 that is included in a speed reducer, the intermediate gear body 63, and the large-diameter gear 67.

The motor is disposed in the motor case 51 such that a driving shaft 61a protrudes from a through-hole that is formed in the bottom wall portion 53 of the gear case 52 and that is not illustrated to the space in the gear case 52. The first worm 62 is mounted on the tip end of the driving shaft 61a.

The intermediate gear body 63 is disposed in the gear case 52. The intermediate gear body 63 includes a shaft portion 64, a small-diameter gear 65 (a first worm wheel) that is disposed on one end portion 64a of the shaft portion 64 and that engages with the first worm 62, and a second worm 66 that is disposed on the other end portion 64b of the shaft portion 64 and that engages with the large-diameter gear 67 (a second worm wheel).

The large-diameter gear 67 is disposed in the gear case 52. The round columnar portion 41 of the valve shaft 40 is mounted in a through-hole that is formed at the center of the large-diameter gear 67 by press-fitting.

The driving section 60 transmits rotational force of the driving shaft 61a of the motor to the valve shaft 40 via the first worm 62, the intermediate gear body 63, and the large-diameter gear 67 and causes the valve shaft 40 to rotate about the axis L. Consequently, the ball valve member 20 moves to the desired rotational position.

The rotational position detection portion 80 includes the potentiometer shaft 81 corresponding to a rotational angle output shaft, a potentiometer base 82 corresponding to a base body, and a potentiometer 85 corresponding to a rotational angle sensor.

The potentiometer shaft 81 is composed of, for example, metal such as stainless steel or brass, or synthetic resin such as polyphenylene sulfide (PPS) and is formed separately from the valve shaft 40. The potentiometer shaft 81 is press-fitted in the mounting hole 45 of the valve shaft 40 and is coaxially secured to and mounted on the valve shaft 40. A fitting shaft portion 81a is disposed on an upper end portion of the potentiometer shaft 81, has a D-shape, and engages with a rotor 86 of the potentiometer 85. The fitting shaft portion 81a may be integrally formed with the end surface 41a of the valve shaft 40.

The potentiometer base 82 is composed of synthetic resin and includes a base main body portion 83 and a sensor support portion 84, integrally formed with each other.

The base main body portion 83 has a substantially flat plate shape and is secured to and mounted on bosses 53b that protrude upward from the bottom wall portion 53 of the gear case 52 by using screws 95.

The sensor support portion 84 includes a bottom wall portion 84a that has a substantially disk shape the diameter of which is smaller than that of the large-diameter gear 67 and a side wall portion 84b that has an arc shape that extends upward from an edge portion of the bottom wall portion 84a. The bottom wall portion 84a is disposed above the large-diameter gear 67 in the gear case 52 so as to face the end surface 41a of the round columnar portion 41 of the valve shaft 40. A recessed portion that is lower than the edge portion is formed at the center of the upper surface of the bottom wall portion 84a. The recessed portion has a position adjustment through-hole 84a1 that has an arc shape along an outer circumferential surface 41b of the round columnar portion 41 of the valve shaft 40 and an output shaft through-hole 84a2 that is circular. The bottom wall portion 84a may not have the recessed portion and may have a flat upper surface. The position adjustment through-hole 84a1 preferably has an arc shape such as a substantially half circle or a substantially three-fourth circle. The position adjustment through-hole 84a1 and the side wall portion 84b have concentric arc shapes centered on the output shaft through-hole 84a2. The position adjustment through-hole 84a1 is formed such that the valve shaft 40 is visible when viewed in the direction of the axis L. The potentiometer 85 is mounted at the center of the upper surface of the bottom wall portion 84a. The shape of the bottom wall portion 84a may be, for example, a shape other than a disk shape such as a quadrangular plate shape.

The potentiometer 85 is the rotational angle sensor for detecting a rotational angle. The potentiometer 85 includes the rotor 86 that has a disk shape and a meter main body portion 87 corresponding to a signal output portion that rotatably supports the rotor 86 and that outputs a signal (voltage) depending on the rotational angle of the rotor 86. A fitting hole 86a that has a D-shape in a plan view is formed at the center of the rotor 86. The fitting hole 86a is disposed coaxially with the output shaft through-hole 84a2 of the sensor support portion 84. The fitting shaft portion 81a of the potentiometer shaft 81 extends through the fitting hole 86a and is fitted in the fitting hole 86a. The rotor 86 is rotated together with rotation of the fitting shaft portion 81a. Consequently, the potentiometer 85 detects the rotational angle of the potentiometer shaft 81 (that is, the valve shaft 40 and the ball valve member 20) about the axis L.

As for the flow channel switching valve 1, the rotational force of the driving shaft 61a of the motor that is included in the driving section 60 is transmitted to the valve shaft 40 via the large-diameter gear 67 and other things, and the valve shaft 40 is rotated about the axis L. As the valve shaft 40 rotates, the ball valve member 20 is rotated about the axis L and positioned in each rotational position. This achieves connections of the flow channels depending on the rotational position. The potentiometer shaft 81 is rotated about the axis L together with the valve shaft 40, and the potentiometer 85 outputs a signal depending on the rotational angle of the potentiometer shaft 81. The rotational position of the ball valve member 20 can be monitored based on the signal that is outputted from the potentiometer 85.

A method for assembling the flow channel switching valve 1 according to the present embodiment described above will now be described with reference to Fig. 7 and Figs. 8.

The ball valve member 20, the seat members 30, and the sealing members 31 are first installed in the valve body 10. The prism portion 42 of the valve shaft 40 is mounted in the valve shaft insertion hole 24 of the ball valve member 20. The round columnar portion 41 of the valve shaft 40 is inserted into the bearing portion 56 of the case 50. The valve body 10 and the inner peripheral wall portion 57 of the case 50 are joined to each other.

Subsequently, as illustrated in Fig. 5, the large-diameter gear 67 is mounted on the round columnar portion 41 of the valve shaft 40, and the first worm 62 is mounted on the driving shaft 61a of the motor. The intermediate gear body 63 is mounted on the peripheral wall portion 55 of the case 50 so as to be supported rotatably about the axis such that the small-diameter gear 65 engages with the first worm 62, and the second worm 66 engages with the large-diameter gear 67. The potentiometer shaft 81 is inserted into the mounting hole 45 of the valve shaft 40. At this time, the potentiometer shaft 81 is not press-fitted in the mounting hole 45.

Subsequently, the positions of the potentiometer base 82 and the valve shaft 40 are adjusted before the potentiometer 85 is mounted. Specifically, as illustrated in Fig. 6, the potentiometer base 82 is disposed such that screw holes 83a that are formed in the base main body portion 83 overlap the bosses 53b of the case 50. At this time, the fitting shaft portion 81a of the potentiometer shaft 81 is inserted into the output shaft through-hole 84a2 of the sensor support portion 84. The position of the potentiometer base 82 is adjusted such that the round columnar portion 41 of the valve shaft 40 is visible without deviation through the position adjustment through-hole 84a1 of the sensor support portion 84 (i.e., when viewed in the direction of the axis L, the round columnar portion 41 is visible with uniform width in the circumferential direction).

The positions of the potentiometer base 82 and the valve shaft 40 are adjusted by using a position adjustment jig 200. As illustrated in Figs. 8, the position adjustment jig 200 includes a jig body 201 that has a round columnar shape and a position adjustment portion 202 that has an arc wall shape that extends downward from the lower surface of the jig body 201. The jig body 201 and the position adjustment portion 202 are coaxially disposed. An insertion hole 201b in which the fitting shaft portion 81a of the potentiometer shaft 81 is to be inserted is formed at the center of the lower surface of the jig body 201. The outer diameter D1 of the jig body 201 is equal to the inner diameter of the side wall portion 84b of the sensor support portion 84. The inner diameter D2 of the position adjustment portion 202 is equal to the outer diameter of the round columnar portion 41 of the valve shaft 40. As illustrated in Fig. 7, the position adjustment portion 202 of the position adjustment jig 200 is inserted into the position adjustment through-hole 84a1 of the sensor support portion 84. Consequently, an inner surface 202a (a part of the position adjustment jig 200) of the position adjustment portion 202 comes into contact with the outer circumferential surface 41b of the round columnar portion 41 of the valve shaft 40, and an outer circumferential surface 201a (the other part of the position adjustment jig 200) of the jig body 201 comes into contact with an inner surface 84b1 of the side wall portion 84b of the sensor support portion 84. For this reason, the positional relationship between the valve shaft 40 and the sensor support portion 84 is fixed with the output shaft through-hole 84a2 and the valve shaft 40 being coaxial. The fitting shaft portion 81a of the potentiometer shaft 81 is inserted into the insertion hole 201b of the jig body 201, and the posture thereof is corrected so as to be along the axis L. The screws 95 are screwed to the screw holes 83a of the base main body portion 83 and fitted into the bosses 53b, and the potentiometer base 82 is mounted on the case 50. The position adjustment jig 200 is subsequently removed. In this state, the potentiometer base 82 and the valve shaft 40 are disposed with precision.

Subsequently, the fitting shaft portion 81a of the potentiometer shaft 81 is fitted into the fitting hole 86a that is formed in the rotor 86 of the potentiometer 85 so as to extend therethrough. The potentiometer 85 is disposed at the center of the bottom wall portion 84a of the sensor support portion 84 of the potentiometer base 82, is secured by, for example, soldering and mounted. The potentiometer shaft 81 is rotated about the axis L in the mounting hole 45, and the position thereof is adjusted with respect to the axis L such that a proper signal is outputted from the potentiometer 85. The potentiometer shaft 81 is subsequently press-fitted and secured in the mounting hole 45. Subsequently, the upper wall portion 54 is mounted on the peripheral wall portion 55 of the case 50, and the flow channel switching valve 1 is completed.

As for the flow channel switching valve 1 according to the present embodiment described above, the rotational position detection portion 80 that detects the rotational position of the ball valve member 20 includes the potentiometer 85 that detects the rotational angle of the valve shaft 40 and the potentiometer base 82 that supports the potentiometer 85. The potentiometer base 82 includes the base main body portion 83 that is mounted on the case 50. The potentiometer base 82 also includes the sensor support portion 84 that is disposed facing the round columnar portion 41 of the valve shaft 40, and on which the potentiometer 85 is mounted. The sensor support portion 84 has the position adjustment through-hole 84a1 that has an arc shape along the outer circumferential surface 41b of the round columnar portion 41 of the valve shaft 40. In this way, the positions of the valve shaft 40 and the sensor support portion 84 can be adjusted while the valve shaft 40 is viewed through the position adjustment through-hole 84a1. In addition, the position adjustment jig 200 is used. The position adjustment portion 202 of the jig 200 is inserted into the position adjustment through-hole 84a1, the inner surface 202a is brought into contact with the outer circumferential surface 41b of the round columnar portion 41 of the valve shaft 40, and the outer circumferential surface 201a of the jig body 201 of the jig 200 is brought into contact with the inner surface 84b1 of the side wall portion 84b of the sensor support portion 84. This enables the positions of the valve shaft 40 and the sensor support portion 84 to be adjusted. For this reason, the potentiometer base 82 can be disposed with precision with respect to the valve shaft 40, and the valve shaft 40 and the potentiometer 85 can be effectively inhibited from being misaligned.

The sensor support portion 84 includes the side wall portion 84b that is formed so as to surround the position adjustment through-hole 84a1. In this way, the inner surface 84b1 of the side wall portion 84b is brought into contact with the outer circumferential surface 201a of the jig body 201 of the jig 200, and the positions of the valve shaft 40 and the sensor support portion 84 can be adjusted.

The potentiometer shaft 81 that is press-fitted in the mounting hole 45 that is formed in the end surface 41a of the round columnar portion 41 of the valve shaft 40 is further included, and the sensor support portion 84 has the output shaft through-hole 84a2 through which the potentiometer shaft 81 extends. In this way, the posture of the potentiometer shaft 81 can be corrected with the sensor support portion 84 facing the valve shaft 40.

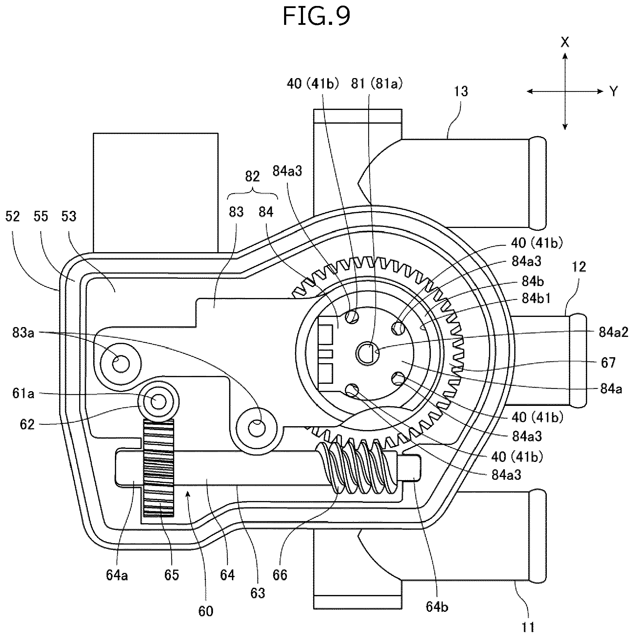

In the embodiment described above, the sensor support portion 84 has the position adjustment through-hole 84a1 that has an arc shape along the outer circumferential surface 41b of the round columnar portion 41 of the valve shaft 40 but is not limited thereto. For example, as illustrated in Fig. 9, position adjustment through-holes 84a3 that are arranged in an interval along the outer circumferential surface 41b of the round columnar portion 41 of the valve shaft 40 may be formed instead of the position adjustment through-hole 84a1 that has an arc shape. Fig. 9 is a plan view for describing a method for assembling a modification of the flow channel switching valve in Fig. 1 with the position of the potentiometer base adjustment. The position adjustment through-holes 84a3 have circular shapes and are formed such that the valve shaft 40 can be viewed in the direction of the axis L. In Fig. 9, four position adjustment through-holes 84a3 are formed so as to surround the output shaft through-hole 84a2. However, three or more position adjustment through-holes 84a3 may be formed so as to surround the output shaft through-hole 84a2 unless it goes against the purpose of the present invention. The positions of the valve shaft 40 and the sensor support portion 84 can be adjusted while the valve shaft 40 is viewed through the position adjustment through-holes 84a3. The use of a jig that is suitable for the position adjustment through-holes 84a3 enables the positions of the valve shaft 40 and the sensor support portion 84 to be adjusted as in the embodiment described above.

In the embodiment described above, the sensor support portion 84 has the side wall portion 84b, but not limited to this configuration. The flow channel switching valve 1 may have a configuration in which the side wall portion 84b is omitted. When the jig 200 is used with the configuration, the outer diameter of the position adjustment portion 202 of the jig 200 is set to be equal to the outer diameter of the position adjustment through-hole 84a1. In this way, when the position adjustment portion 202 is inserted into the position adjustment through-hole 84a1, the inner surface 202a of the position adjustment portion 202 comes into contact with the outer peripheral surface 41b of the round columnar portion 41 of the valve shaft 40, an outer surface 202b of the position adjustment portion 202 comes into contact with an inner surface positioned outside the position adjustment through-hole 84a1, and the positional relationship between the valve shaft 40 and the sensor support portion 84 is fixed. The side wall portion 84b that is disposed so as to surround the position adjustment through-hole 84a1 enables a portion that is relatively far from the valve shaft 40 to be brought into contact with the position adjustment jig 200 to adjust the positions of the potentiometer base 82 and the valve shaft 40. Accordingly, this is advantageous for the precision of position adjustment.

1 ··· flow channel switching valve, 10 ··· valve body, 10a ··· left side wall portion, 10b ··· front wall portion, 10c ··· right side wall portion, 11 ··· first flow channel, 12 ... second flow channel, 13 ··· third flow channel, 11a, 12a, 13a ··· opening, 14 ··· valve chamber, 20 ··· ball valve member, 21 ··· first opening, 22 ··· second opening, 23 ··· third opening, 24 ... valve shaft insertion hole, 25 ··· switching flow channel, 30 ··· seat member, 30a ··· annular groove, 31 ··· sealing member, 40 ··· valve shaft, 41 ··· round columnar portion, 41a ... end surface, 41b ··· outer circumferential surface, 42 ··· prism portion, 44 ··· O-ring, 45 ··· mounting hole, 50 ··· case, 51 ··· motor case, 52 ··· gear case, 53 ··· bottom wall portion, 54 ··· upper wall portion, 55 ··· peripheral wall portion, 56 ... bearing portion, 57 ··· inner peripheral wall portion, 60 ··· driving section, 61a ··· driving shaft, 62 ··· first worm, 63 ... intermediate gear body, 64 ··· shaft portion, 64a ··· one end portion, 64b ··· the other end portion, 65 ··· small-diameter gear, 66 ··· second worm, 67 ··· large-diameter gear, 70 ... ventilation portion, 80 ··· rotational position detection portion, 81 ··· potentiometer shaft, 81a ··· fitting shaft portion, 82 ··· potentiometer base, 83 ··· base main body portion, 83a ··· screw hole, 84 ··· sensor support portion, 84a ... bottom wall portion, 84a1, 84a3 ··· position adjustment through-hole, 84a2 ··· output shaft through-hole, 84b ··· side wall portion, 84b1 ··· inner surface, 85 ··· potentiometer, 86 ··· rotor, 87 ··· meter main body portion, 95 ··· screw, 200 ··· jig, 201 ··· jig body, 201a ··· outer circumferential surface, 201b ··· insertion hole, 202 ··· position adjustment portion, 202a ··· inner surface, 202b ··· outer surface

## Claims

1. A flow channel switching valve (1) comprising:
a valve body (10);
a valve member (20) that is rotatably installed in the valve body (10);
a valve shaft (40) that is mounted on the valve member (20);
a driving section (60) that rotationally drives the valve member (20) via the valve shaft (40);
a rotational position detection portion (80) that detects a rotational position of the valve member (20); and
a case (50) that is mounted on the valve body (10) and that contains the driving section (60) and the rotational position detection portion (80),
wherein the valve shaft (40) is rotatably supported by a bearing portion (56) that is included in the case (50), and the valve shaft (40) has an end portion on which the valve member (20) is mounted,
wherein the rotational position detection portion (80) includes a rotational angle sensor that detects a rotational angle of the valve shaft (40) and a base body (82) that supports the rotational angle sensor,
wherein the base body (82) includes a base main body portion (83) that is mounted on the case (50) and a sensor support portion (84) that is disposed facing the other end portion (64b) of the valve shaft (40) and having the rotational angle sensor mounted thereon, and
**characterized in that** the sensor support portion (84) has a through-hole (84a1) that has an arc shape along an outer circumferential surface (41b) of the valve shaft (40) and that is formed such that the valve shaft (40) is visible when viewed in the direction of the axis of the valve shaft (40) or through-holes (84a3) that are arranged in an interval along the outer circumferential surface (41b) of the valve shaft (40) and that are formed such that the valve shaft (40) is visible when viewed in the direction of the axis of the valve shaft (40).

2. The flow channel switching valve according to Claim 1, wherein the sensor support portion (84) includes a side wall portion (84b) that surrounds the through-hole (84a1) or the through-holes (84a3).

3. The flow channel switching valve according to Claim 1 or Claim 2, further comprising: a rotational angle output shaft that is press-fitted in a mounting hole (45) formed in an end surface of the other end portion of the valve shaft (40), and
wherein the sensor support portion (84) has an output shaft through-hole (84a2) through which the rotational angle output shaft extends.

4. A method for assembling the flow channel switching valve of claim 1,
the method comprising:
adjusting a position of the base body (82) such that a round columnar portion (41) of the valve shaft (40) is visible without deviation through the through-hole (84a1) or the through-holes (84a3);
subsequently, inserting a part of a jig (200) into the through-hole (84a1) or the through-holes (84a3) to bring the part into contact with the outer circumferential surface (41b) of the valve shaft (40) and to bring the other part of the jig (200) into contact with the sensor support portion (84); adjusting positions of the valve shaft (40) and the sensor support portion (84); subsequently, mounting the base main body portion (83) on the case (50); and
subsequently, removing the jig (200).

5. The method according to Claim 4, wherein the sensor support portion (84) includes a side wall portion (84b) that surrounds the through-hole (84a1) or the through-holes (84a3),
the other end portion of the valve shaft (40) includes a round columnar portion (41),
the jig (200) includes a jig body (201) that has a round columnar shape and a position adjustment portion (202) that has an arc wall shape that extends downward from the lower surface of the jig body (201), the jig body (201) and the position adjustment portion (202) being coaxially disposed,
wherein the outer diameter (D1) of the jig body (201) is equal to the inner diameter of the side wall portion (84b) of the sensor support portion (84),
and the inner diameter (D2) of the position adjustment portion (202) is equal to the outer diameter of the round columnar portion (41) of the valve shaft (40),
the method further comprising:
inserting the position adjustment portion (202) of the position adjustment jig (200) into the position adjustment through-hole (84a1) or the through-holes (84a3) of the sensor support portion (84) such that an inner surface (202a) of the position adjustment portion (202) comes into contact with the outer circumferential surface (41b) of the round columnar portion (41) of the valve shaft (40), and an outer circumferential surface (201a) of the jig body (201) comes into contact with an inner surface (84b1) of the side wall portion (84b) of the sensor support portion (84).

## Patentansprüche

1. Strömungskanal-Umschaltventil (1), umfassend:
einen Ventilkörper (10);
ein Ventilelement (20), das drehbar in dem Ventil (10) installiert ist;
eine Ventilwelle (40), die auf dem Ventilelement (20) montiert ist;
einen Antriebsteil (60), der das Ventilelement (20) über die Ventilwelle (40) zur Drehung antreibt;
einen Drehpositions-Detektionsteil (80), der eine Drehposition des Ventilelements (20) detektiert; und
ein Gehäuse (50), das auf dem Ventilkörper (10) montiert ist und den Antriebsteil (60) und den Drehpositionsteil (80) enthält,
wobei die Ventilwelle (40) drehbar durch einen Lagerteil (56) gelagert ist, der in dem Gehäuse (50) eingeschlossen ist, und die Ventilwelle (40) einen Endabschnitt aufweist, auf welchem das Ventilelement (20) montiert ist,
wobei der Drehpositions-Detektionsteil (80) einen Drehwinkelsensor umfasst, der einen Drehwinkel der Ventilwelle (40) detektiert, und einen Grundkörper (82), der den Drehwinkelsensor lagert,
wobei der Grundkörper (82) einen Grundkörperhauptteil (83) umfasst, der auf dem Gehäuse (50) montiert ist, und einen Sensorlagerteil (84), der derart angeordnet ist, dass er dem anderen Endabschnitt (64b) der Ventilwelle (40) zugewandt ist, und auf welchem der Drehwinkelsensor montiert ist,
**dadurch gekennzeichnet, dass** der Sensorlagerteil (84) ein Durchgangsloch (84a1) aufweist, das sich bogenförmig entlang einer äußeren Umfangsfläche (41b) der Ventilwelle (40) erstreckt und derart geformt ist, dass die Ventilwelle (40) entlang der Richtung der Achse der Ventilwelle (40) betrachtet sichtbar ist, oder Durchgangslöcher (84a3), die in einem Abstand entlang der äußeren Umfangsfläche (41b) der Ventilwelle (40) angeordnet sind und derart geformt sind, dass die Ventilwelle (40) entlang der Richtung der Achse der Ventilwelle (40) betrachtet sichtbar ist.

2. Strömungskanal-Umschaltventil gemäß Anspruch 1, bei welchem der Sensorlagerteil (84) einen Seitenwandteil (84b) umfasst, der das Durchgangsloch (84a1) oder die Durchgangslöcher (84a3) umgibt.

3. Strömungskanal-Umschaltventil gemäß Anspruch 1 oder Anspruch 2, ferner umfassend eine Drehwinkel-Ausgangswelle, die in ein Montageloch (45) eingepresst ist, die in einer Endfläche des anderen Endabschnitts der Ventilwelle (40) ausgebildet ist,
wobei der Sensorlagerteil (84) ein Ausgangswellen-Durchgangsloch (84a2) umfasst, durch welches sich die Drehwinkel-Ausgangswelle erstreckt.

4. Verfahren zum Zusammenbau des Strömungskanal-Umschaltventils gemäß Anspruch 1,
welches Verfahren umfasst:
Einstellen einer Position des Grundkörpers (82) derart, dass ein runder, säulenförmiger Teil (41) der Ventilwelle (40) ohne Abweichung durch das Durchgangsloch (84a1) oder die Durchgangslöcher (84a3) sichtbar ist;
nachfolgendes Einsetzen eines Teils eines Werkzeugs (200) in das Durchgangsloch (84a1) oder die Durchgangslöcher (84a3), um den Teil in Kontakt mit der äußeren Umfangsfläche (41b) der Ventilwelle (40) zu bringen und um den anderen Teil des Werkzeugs (200) in Kontakt mit dem Sensorlagerteil (84) zu bringen; Einstellen der Positionen der Ventilwelle (40) und des Sensorlagerteils (84); und nachfolgendes Montieren des Grundkörper-Hauptteils (83) auf dem Gehäuse (50); und
nachfolgendes Entfernen des Werkzeugs (200).

5. Verfahren gemäß Anspruch 4, bei welchem der Sensorlagerteil (84) einen Seitenwandteil (84b) umfasst, der das Durchgangsloch (84a1) oder die Durchgangslöcher (84a3) umgibt,
wobei der andere Endabschnitt der Ventilwelle (40) einen runden säulenförmigen Teil (41) aufweist,
wobei das Werkzeug (200) einen Werkzeugkörper (201) mit einer runden, säulenförmigen Form und einen Positionseinstellteil (202) umfasst, der die Form einer bogenförmigen Wand aufweist, die sich von der unteren Oberfläche des Werkzeugkörpers (201) nach unten erstreckt, wobei der Werkzeugkörper (201) und der Positionseinstellteil (202) koaxial angeordnet sind,
wobei der Außendurchmesser (D1) des Werkzeugkörpers (201) gleich dem Innendurchmesser des Seitenwandteils (84b) des Sensorlagerteils (84) ist, und der Innendurchmesser (D2) des Positionseinstellteils (202) gleich dem Außendurchmesser des runden, säulenförmigen Teils (41) der Ventilwelle (40) ist,
welches Verfahren ferner umfasst:
Einsetzen des Positionseinstellteils (202) des Positionseinstellwerkzeugs (200) in das Positionseinstell-Durchgangsloch (84a1) oder die Durchgangslöcher (84a3) des Sensorlagerteils (84) derart, dass eine Innenfläche (202a) des Positionseinstellteils (202) in Kontakt mit der äußeren Umfangsfläche (41b) des runden, säulenförmigen Teils (41) der Ventilwelle (40) kommt, und eine äußere Umfangsfläche (201a) des Werkzeugkörpers (201) in Kontakt mit einer inneren Oberfläche (84b1) des Seitenwandteils (84b) des Sensorlagerteils (84) kommt.

## Revendications

1. Soupape de commutation de canal d'écoulement (1) comportant :
un corps de soupape (10) ;
un élément de soupape (20) qui est installé de façon à pouvoir tourner dans le corps de soupape (10) ;
une tige de soupape (40) qui est montée sur l'élément de soupape (20) ;
une section d'entraînement (60) qui entraîne en rotation l'élément de soupape (20) via la tige de soupape (40) ;
une portion de détection de position de rotation (80) qui détecte une position de rotation de l'élément de soupape (20) ; et
un boîtier (50) qui est monté sur le corps de soupape (10) et qui contient la section d'entraînement (60) et la portion de détection de position de rotation (80),
dans laquelle la tige de soupape (40) est supportée en rotation par une portion de palier (56) qui est incluse dans le boîtier (50), et la tige de soupape (40) a une portion d'extrémité sur laquelle l'élément de soupape (20) est monté,
dans laquelle la portion de détection de position de rotation (80) inclut un capteur d'angle de rotation qui détecte un angle de rotation de la tige de soupape (40) et un corps de base (82) qui supporte le capteur d'angle de rotation,
dans laquelle le corps de base (82) inclut une portion de corps principal de base (83) qui est montée sur le boîtier (50) et une portion de support de capteur (84) qui est disposée face à l'autre portion d'extrémité (64b) de la tige de soupape (40) et ayant le capteur d'angle de rotation monté sur celle-ci, et
**caractérisée en ce que** la portion de support de capteur (84) a un trou traversant (84a1) qui a une forme d'arc le long d'une surface circonférentielle extérieure (41b) de la tige de soupape (40) et qui est formé de telle sorte que la tige de soupape (40) est visible lorsqu'elle est vue dans la direction de l'axe de la tige de soupape (40), ou des trous traversant (84a3) qui sont agencés dans un intervalle le long de la surface circonférentielle extérieure (41b) de la tige de soupape (40) et qui sont formés de telle sorte que la tige de soupape (40) est visible lorsqu'elle est vue dans la direction de l'axe de la tige de soupape (40).

2. Soupape de commutation de canal d'écoulement selon la revendication 1, dans laquelle la portion de support de capteur (84) inclut une portion de paroi latérale (84b) qui entoure le trou traversant (84a1) ou les trous traversants (84a3).

3. Soupape de commutation de canal d'écoulement selon la revendication 1 ou la revendication 2, comportant en outre : un arbre de sortie d'angle de rotation qui est ajusté de manière serrée dans un trou de montage (45) formé dans une surface d'extrémité de l'autre portion d'extrémité de la tige de soupape (40), et
dans laquelle la portion de support de capteur (84) a un trou traversant d'arbre de sortie (84a2) à travers lequel l'arbre de sortie d'angle de rotation s'étend.

4. Procédé pour assembler la soupape de commutation de canal d'écoulement de la revendication 1,
le procédé comportant les étapes consistant à :
régler une position du corps de base (82) de telle sorte qu'une portion colonnaire ronde (41) de la tige de soupape (40) est visible sans déviation à travers le trou traversant (84a1) ou les trous traversants (84a3) ;
insérer ensuite une partie d'un gabarit (200) dans le trou traversant (84a1) ou les trous traversants (84a3) pour mettre la partie en contact avec la surface circonférentielle extérieure (41b) de la tige de soupape (40) et pour mettre l'autre partie du gabarit (200) en contact avec la portion de support de capteur (84) ; régler des positions de la tige de soupape (40) et de la portion de support de capteur (84) ; monter ensuite la portion de corps principal de base (83) sur le boîtier (50) ; et
retirer ensuite le gabarit (200).

5. Procédé selon la revendication 4, dans lequel la portion de support de capteur (84) inclut une portion de paroi latérale (84b) qui entoure le trou traversant (84a1) ou les trous traversants (84a3),
l'autre portion d'extrémité de la tige de soupape (40) inclut une portion colonnaire ronde (41),
le gabarit (200) inclut un corps de gabarit (201) qui a une forme colonnaire ronde et une portion de réglage de position (202) qui a une forme de paroi en arc qui s'étend vers le bas depuis la surface inférieure du corps de gabarit (201), le corps de gabarit (201) et la portion de réglage de position (202) étant disposés de façon coaxiale,
dans lequel le diamètre extérieur (D1) du corps de gabarit (201) est égal au diamètre intérieur de la portion de paroi latérale (84b) de la portion de support de capteur (84),
et le diamètre intérieur (D2) de la portion de réglage de position (202) est égal au diamètre extérieur de la portion colonnaire ronde (41) de la tige de soupape (40),
le procédé comportant en outre l'étape consistant à :
insérer la portion de réglage de position (202) du gabarit de réglage de position (200) dans le trou traversant de réglage de position (84a1) ou les trous traversants (84a3) de la portion de support de capteur (84) de telle sorte qu'une surface intérieure (202a) de la portion de réglage de position (202) vient en contact avec la surface circonférentielle extérieure (41b) de la portion colonnaire ronde (41) de la tige de soupape (40), et une surface circonférentielle extérieure (201a) du corps de gabarit (201) vient en contact avec une surface intérieure (84b1) de la portion de paroi latérale (84b) de la portion de support de capteur (84).
